(19) **Europäisches Patentamt**
**European Patent Office**
**Office européen des brevets**

(11) **EP 4 328 539 B1**

(12) **EUROPEAN PATENT SPECIFICATION**

(45) Date of publication and mention
of the grant of the patent:
**11.03.2026 Bulletin 2026/11**

(21) Application number: **22804362.6**

(22) Date of filing: **18.03.2022**

(51) International Patent Classification (IPC):
**G01B 11/00** *(2006.01)*    **G01B 11/245** *(2006.01)*
**G01B 11/25** *(2006.01)*    **G06T 1/00** *(2006.01)*

(52) Cooperative Patent Classification (CPC):
**G01B 11/24; G01B 11/25;** G01B 2210/54

(86) International application number:
**PCT/JP2022/012792**

(87) International publication number:
**WO 2022/244444 (24.11.2022 Gazette 2022/47)**

(54) **INFORMATION PROCESSING SYSTEM, INFORMATION PROCESSING METHOD, AND PROGRAM**

INFORMATIONSVERARBEITUNGSSYSTEM, INFORMATIONSVERARBEITUNGSVERFAHREN UND PROGRAMM

SYSTÈME ET PROCÉDÉ DE TRAITEMENT D'INFORMATIONS ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.05.2021 JP 2021084726**

(43) Date of publication of application:
**28.02.2024 Bulletin 2024/09**

(73) Proprietor: **OMRON Corporation**
**Kyoto 600-8530 (JP)**

(72) Inventors:
• **NARUSE, Yosuke**
**Kyoto-shi, Kyoto 600-8530 (JP)**
• **OHNISHI, Yasuhiro**
**Kyoto-shi, Kyoto 600-8530 (JP)**

(74) Representative: **Isarpatent**
**Patent- und Rechtsanwälte**
**Barth Hassa Peckmann & Partner mbB**
**Friedrichstraße 31**
**80801 München (DE)**

(56) References cited:
**WO-A1-2020/004162    JP-A- 2014 126 494**
**JP-A- 2015 178 984    JP-A- H11 183 172**

• **MARTINS ET AL: "Automated 3D surface scanning based on CAD model", MECHATRONICS, PERGAMON PRESS, OXFORD, GB, vol. 15, no. 7, 1 September 2005 (2005-09-01), pages 837 - 857, XP004928420, ISSN: 0957-4158, DOI: 10.1016/ J.MECHATRONICS.2005.01.004**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# EP 4 328 539 B1

**Description**

FIELD

The present invention relates to an information processing system, an information processing method, and a program.

BACKGROUND

A known inspection system includes a sensor that measures an object to inspect the shape and size of the object.

Patent Literature 1 describes a technique for measuring an object with a reduced variation error in measurement by detecting, with a sensor, line light (linear measurement light) emitted onto the object from multiple positions at which the sensor has different relative positions to the object. In addition, Patent Literature 2 describes a photographic measuring system capable of easily taking a photograph while ensuring measuring accuracy by reading a design data of a measurement object and generating a three-dimensional model of the measurement object in a virtual three-dimensional space, like three-dimensional CAD. Non-Patent Literature 1 describes a method to automate the process of surface scanning using optical range sensors and based on a priori known information from a CAD model.

CITATION LIST

PATENT LITERATURE AND NON-PATENT LITERATURE

Patent Literature 1: Japanese Patent Application Publication No. 2012-220338
Patent Literature 2: Japanese Patent Application Publication No. 2015-178984
Non-Patent Literature 1: "Automated 3D surface scanning based on CAD model", MECHATRONICS, PERGAMON PRESS, OXFORD, GB, vol. 15, no. 7, 1 September 2005 (2005-09-01), pages 837-857, XP004928420, ISSN: 0957-4158, DOI: 10.1016/J.MECHATRONICS.2005.01.004

SUMMARY

TECHNICAL PROBLEM

However, the inspection system described in Patent Literature 1 needs costly components that emit and detect the line light with high accuracy. The entire inspection system can thus be costly. In contrast, an inspection system that measures an object based on, instead of line light detection, range images obtained with the principle of triangulation may be less costly. The inspection system that measures the object based on the range images combines multiple range images to generate, as the measurement result of the object, composite data that is a three-dimensional (3D) data set, and inspects the object based on the composite data.

However, when the inspection system measures the object based on the range images, each range image can be insufficiently accurate. The composite data as the measurement result of the object is likely to have noise. To reduce such noise, the object should be imaged at many imaging positions, involving a lot of processes (time) in capturing (obtaining) the range images for object measurement.

One or more aspects of the present invention are directed to a technique for, in measuring an object based on range images obtained using the principle of triangulation, increasing the efficiency of the capturing process of the range images of the object while maintaining the measurement accuracy.

SOLUTION TO PROBLEM

The technique according to one or more aspects of the present invention provides the structure below.

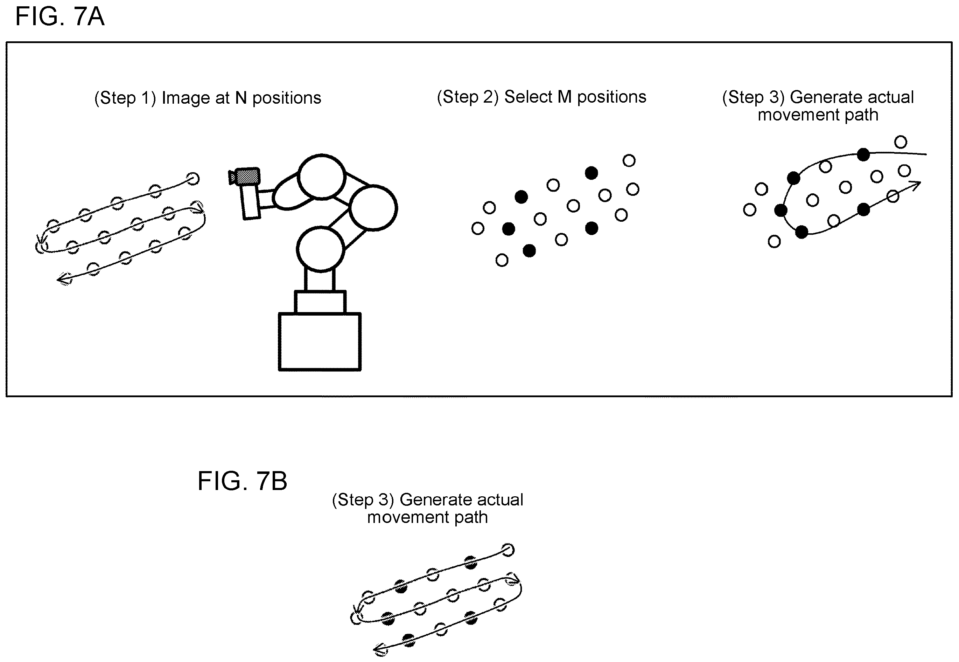

An information processing system according to one aspect of the present invention is an information processing system for a measurement apparatus to perform measurement of an object three-dimensionally using a plurality of range images obtained at different imaging positions by a range image sensor to obtain a range image using a principle of triangulation. The information processing system is a system for determining imaging positions at which each of M range images to be used in the measurement of the object are captured. The information processing system includes an imaging controller that controls and moves the range image sensor (20) to N imaging positions and obtains N range images of a teaching object at the N imaging positions, where N > M, a data generator that generates a plurality of composite data

2

pieces from a plurality of different combinations of the N range images, and a determiner that calculates accuracy of each of the plurality of composite data pieces indicating a degree of matching between the composite data piece and the teaching object, and determines M imaging positions from the N imaging positions based on the accuracy of each of the plurality of composite data pieces (steps 1 and 2 in FIG. 7 A).

This structure allows highly accurate inspection of the object imaged at fewer imaging positions (M is a smaller number). In other words, this structure can reduce, when measuring the object (workpiece) using the range images, the number of range images of the object while maintaining high measurement accuracy. For the above technique, the teaching object and the object may be, for example, objects with the same model number.

In the above information processing system, each of the plurality of composite data pieces may be point cloud data representing the object in a three-dimensional space using a point cloud. The accuracy may be a value based on a variation in the point cloud with respect to the teaching object.

In the above information processing system, the variation in the point cloud may be based on variations of points in the plurality of composite data pieces with respect to a predetermined reference surface and on variations of points in the plurality of composite data pieces with respect to a surface of the teaching object. This structure uses a predetermined reference surface and a predetermined surface of the teaching object. This allows a user to determine the variation in the point cloud without inputting detailed information about the teaching object. This can reduce the workload on the user in determining the M imaging positions.

The above information processing system may further include a path generator that generates a movement path for changing a position of the range image sensor among the M imaging positions to allow the range image sensor to complete imaging the object at the M imaging positions in a shortest time. This structure can generate a path for the range image sensor to move among the M imaging positions more efficiently and can thus perform the imaging processes more efficiently when measuring the object (step 3 in FIG. 7A).

In the above information processing system, the determiner may determine the M imaging positions based on the accuracy and time for imaging used by the range image sensor. This structure can adjust a balance between the measurement accuracy of the object in measuring the object and the time for imaging.

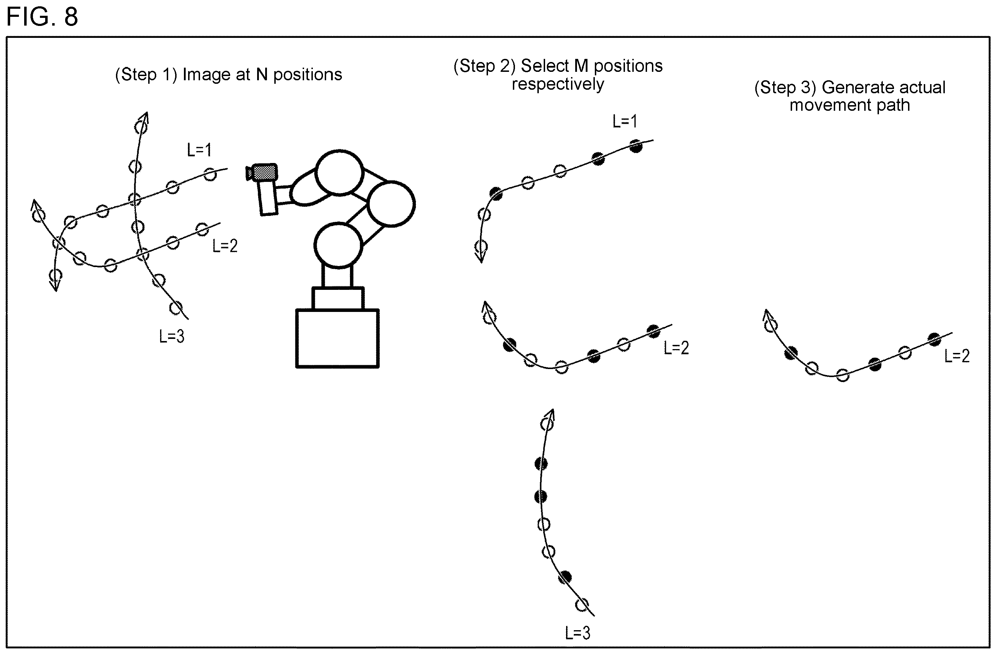

The above information processing system may further include an obtainer that obtains a plurality of tentative movement paths, each of which includes the N imaging positions and each of which is a movement path of the range image sensor. For each of the plurality of tentative movement paths, the imaging controller may obtain the N range images. The data generator may generate the plurality of composite data pieces, The determiner may determine candidates for the M imaging positions based on the accuracy of each of the plurality of composite data pieces. The determiner may select one tentative movement path from the plurality of tentative movement paths and determine the candidates for the M imaging positions corresponding to the selected one tentative movement path as the M imaging positions. This structure can generate the optimum actual movement path (M actual imaging positions can be determined) based on the many tentative movement paths and thus M actual imaging positions for more accurate measurement can be determined (FIG. 8).

In the above information processing system, the range image sensor may have a predetermined upper limit for time for imaging. The M may be a greatest number of range images to be captured by the range image sensor until the time for imaging used by the range image sensor reaches the upper limit. This structure can adjust a balance between the measurement accuracy of the object in measuring the object and the time for imaging.

The above information processing system may further include a controller that controls a display to display a graph showing a relationship between a number of imaging positions determined by the determiner and the accuracy. The M may be a number input by a user after the graph is displayed. This structure allows the user to easily grasp, using the displayed graph, the relationship between the number of imaging positions and the measurement accuracy. Thus, when the user determines a value of M as the number of imaging positions, the user can determine it easily

In the above information processing system, the controller may control the display to display a graph showing a relationship between time for imaging used by the range image sensor, the number of imaging positions determined by the determiner, and the accuracy. This structure allows the user to easily grasp, using the displayed graph, the relationship between the number of imaging positions, the measurement accuracy, and the time for imaging. The user can thus appropriately determine a value of M as the number of imaging positions with additionally considering the time for imaging.

In the above information processing system, the determiner may select a most accurate range image from the N range images. The determiner may further repeatedly select, until the M range images are selected, another range image from unselected images of the N range images based on the accuracy of each of composite data pieces generated from combinations of the unselected images of the N range images and all selected images of the N range images. The determiner may determine, from the N imaging positions, the M imaging positions corresponding to the selected M range images. This structure can select a (K + 1)th range image more efficiently using the greedy selection method when the K range images are selected, and can thus determine the M imaging positions more efficiently. This can also simplify the structure of the information processing system.

In the above information processing system, the imaging controller may further obtain range images of the teaching object captured with the range image sensor at adjacent positions with certain positional relationships to the N imaging positions. The data generator may generate the plurality of composite data pieces from a plurality of different combinations of N image sets, which may include a range image captured at one of the N imaging positions and a range image captured at an adjacent position of the adjacent positions for the one of the N imaging positions. According to this structure, the M imaging positions can also be determined based on the range images captured at the imaging positions adjacent to the N imaging positions. The object can thus be measured with stable accuracy when the imaging positions in imaging the object are slightly different from the imaging positions in imaging the teaching object.

In the above information processing system, the imaging controller may further obtain range images of W teaching objects including the teaching object. The range images of each of the W teaching objects may be captured with the range image sensor at the N imaging positions. The data generator may generate the plurality of composite data pieces from a plurality of different combinations of N image sets, each of which may include W range images of the W teaching objects captured respectively at one of the N imaging positions. According to this structure, the M imaging positions can be determined based on the range images of two or more teaching objects captured at the N imaging positions. The object can thus be measured with stable accuracy when the teaching objects have individual differences among them.

In the above information processing system, the information processing system may include the measurement apparatus, which may obtain, as a result of the measurement of the object, composite data of the M range images of the object captured by the range image sensor at the M imaging positions.

One or more aspects of the present invention may be directed to an apparatus including at least one of the above elements, or to an electronic device, an imaging system, an inspection system, a measurement system, an information processing apparatus, an inspection apparatus, or a measurement apparatus. One or more aspects of the present invention may also be directed to a control method, an information processing method, a measurement method, or an inspection method including at least one of the above processes. Furthermore, the present invention may be directed to a program for implementing any of these methods or to a non-transitory recording medium (storage medium) storing the program. The above elements and processes may be combined with one another in any possible manner to form one or more aspects of the present invention.

ADVANTAGEOUS EFFECTS

The technique according to the above aspects of the present invention can increase, in measuring an object based on range images obtained using the principle of triangulation, the efficiency of the capturing process of the range images of the object while maintaining measurement accuracy.

BRIEF DESCRIPTION OF THE DRAWINGS

FIG. 1 is a schematic diagram of an inspection system according to a first embodiment.
FIG. 2 is a block diagram of an information processing apparatus according to the first embodiment, showing its internal structure.
FIG. 3A is a flowchart of a process in a determination phase in the first embodiment, and FIG. 3B is a flowchart of a process in an inspection phase in the first embodiment.
FIG. 4A, FIG. 4B, and FIG. 4C are diagrams describing variation errors in the first embodiment.
FIG. 5A is a flowchart of a process in a determination phase in a fifth embodiment, and FIG. 5B is a flowchart of a process in a determination phase in a sixth embodiment.
FIG. 6A and FIG. 6B are graphs in the fifth embodiment.
FIG. 7A and FIG. 7B are diagrams describing the process in the determination phase in the first embodiment.
FIG. 8 is a diagram describing a process in a determination phase in a third embodiment.
FIG. 9 is a diagram describing composite data in the first embodiment.
FIG. 10 is a diagram describing an effect produced in the first embodiment.

DETAILED DESCRIPTION

Embodiments of the present invention will now be described with reference to the drawings.

<Example Use>

An inspection system 1 for inspecting an object using multiple range images obtained by a range image sensor 20 that obtains range images of the object will now be described. The range image sensor 20 obtains the range images by imaging the object using the principle of triangulation. The inspection system 1 includes a determination phase and a process in an inspection phase. In the inspection phase, the inspection system 1 measures the object by acquiring a plurality of range images of the object by changing the position of the range image sensor 20 among to each of the plurality of imaging positions determined in the determination phase, and inspects object according to the result of measurement

When the multiple range images are obtained by the range image sensor 20 at the same single imaging position, each range image may include, as a measurement error caused by the coordinate noise dependent on the position of the sensor due to bidirectional reflectance distribution function (BRDF) of the object (workpiece), similar coordinate noise will occur in each range image. The noise thus also affects composite data which combined the multiple range images as the measurement result. However, as described in each embodiment below, when the multiple range images are obtained by the range image sensor 20 at the multiple different imaging positions and combined into composite data, the multiple range images can eliminate the coordinate noise from one another. This allows accurate inspection of the object.

In the determination phase, the inspection system 1 determines (sets) the multiple imaging positions for the range image sensor 20 to image the object in the inspection phase. The inspection system 1 determines (sets) the multiple imaging positions based on the accuracy of the composite data which is integrated from the multiple range images captured from the multiple candidate imaging positions.

This allows highly accurate inspection of the object in the inspection phase even if the object is imaged from fewer imaging positions. In other words, when measuring the object using the range images, this can maintain high measurement accuracy and increase the efficiency of the process of capturing the range images of the object. More specifically, this can reduce the number of images captured in the inspection phase (inspection takt time) and the amount of calculation in the process.

<First Embodiment>

[Structure of Inspection System]

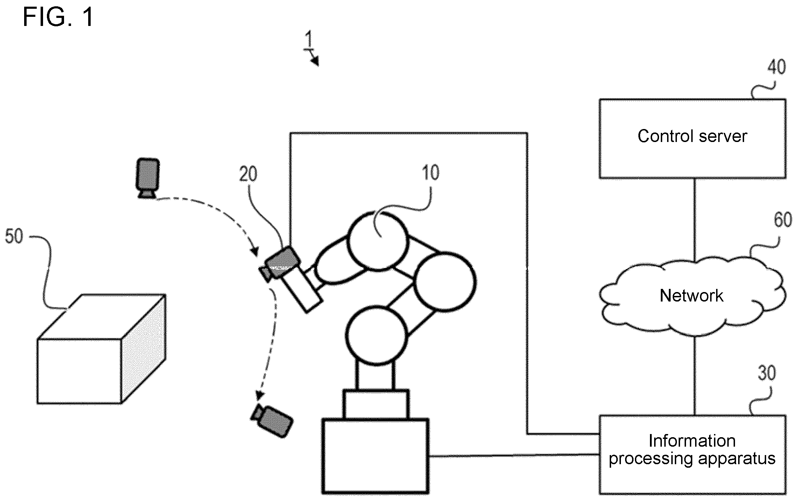

Referring to FIG. 1, the structure of the inspection system 1 according to a first embodiment will be described. The inspection system 1 is an information processing system for inspecting an object. The inspection system 1 includes a determination phase and an inspection phase, objects of the same type (e.g., objects with the same model number) are imaged in the determination phase and the inspection phase. An object (teaching object) imaged in the determination phase to be used for teaching is referred to as a workpiece 50A. An object imaged (inspected) in the inspection phase is referred to as a workpiece 50B. The workpiece 50A and the workpiece 50B are collectively referred to as a workpiece 50. The workpieces 50A and 50B are arranged at the same position and in the same orientation.

The inspection system 1 includes a robot 10, the range image sensor 20, an information processing apparatus 30, and a control server 40.

The robot 10 controls its posture (its movement or arm joint angle) to control the position and orientation of the range image sensor 20. The posture of the robot 10 is controlled by the information processing apparatus 30. The range image sensor 20 is located at the end of the arm in the robot 10. Therefore, it can be regarded as the range image sensor 20 is included in the robot 10. The position and posture in the present embodiment refer to the position and the posture, but it may refer to the position or the posture unless any technical contradiction arises. When the posture corresponding to the position is uniquely determined once the position is determined, the position alone is referred to without referring to the posture.

The range image sensor 20 obtains range images by imaging the workpiece 50. The range images are images in which each of the pixels indicates the distance to the object. More specifically, in the present embodiment, each range image is point cloud data (three-dimensional or 3D data) in which each pixel represents a point indicating whether the object is at the corresponding distance from the range image sensor 20. The range images represent the object in a 3D space using the point cloud (sets of multiple points). In the present embodiment, the range image sensor 20 captures range images with an active stereo method. The active stereo method includes, for example, a method with which an image in a temporally or spatially encoded pattern is irradiated on the imaged object with a projector, and an image in a pattern captured by a camera is analyzed to associate the camera image with the projector image and identify a 3D position based on the principle of triangulation.

The range image sensor 20 may capture range images with any other method than the active stereo method that identifies the 3D position based on the principle of triangulation, such as a passive stereo method or a phase shift method.

The information processing apparatus 30 generates, based on the range images of the workpiece 50B captured by the range image sensor 20, the composite data as 3D data of the workpiece 50B and inspects the workpiece 50B with the composite data. The information processing apparatus 30 determines the imaging positions as positions for the range image sensor 20 to image the workpiece 50 and controls the range image sensor 20 to be at the imaging positions. In the present embodiment, when the position of the range image sensor 20 is determined, the posture of the range image sensor 20 is uniquely determined with an optical axis of the range image sensor 20 extending through the center (or any point) of the workpiece 50. The information processing apparatus 30 changes, when moving the range image sensor 20 to another imaging position, the posture of the range image sensor 20 as appropriate for the imaging position.

The control server 40 controls multiple information processing apparatuses 30 through a network 60. The control server 40 may include some or all of the components included in the information processing apparatus 30.

[Structure of Information Processing Apparatus]

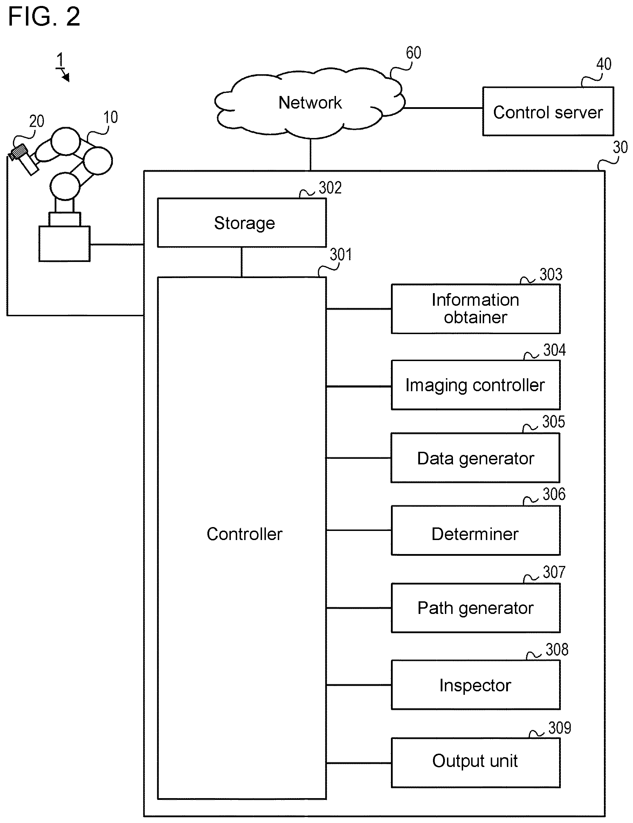

Referring to the block diagram of FIG. 2, the internal structure of the information processing apparatus 30 will be described. The information processing apparatus 30 includes a controller 301, a storage 302, an information obtainer 303, an imaging controller 304, a data generator 305, a determiner 306, a path generator 307, an inspector 308, and an output unit 309.

The controller 301 controls each component of the information processing apparatus 30 in accordance with a program stored in the storage 302. The process performed by the controller 301 may be performed by the control server 40.

The storage 302 stores information for each component to operate and the program executable by the controller 301. The storage 302 stores, for example, information about a tentative movement path that is a tentative path along which the range image sensor 20 moves in the determination phase. The storage 302 stores information about N (N is a natural number greater than or equal to two) imaging positions (hereafter referred to as tentative imaging positions) for the range image sensor 20 to image the workpiece 50A in the tentative movement path. The storage 302 also stores specification information about the workpiece 50, such as its shape, size, and surface smoothness. The specification information may be information about a 3D model (computer-aided design or CAD model) of the workpiece 50, or information about a planar model showing a range of the planar surface of the workpiece 50.

The information obtainer 303 obtains, from the range image sensor 20, the range images of the workpiece 50 captured by the range image sensor 20. The information obtainer 303 also obtains, based on a user input (or from the storage 302), the information about the tentative movement path, the information about the tentative imaging positions, and the specification information.

The imaging controller 304 controls the operations of the robot 10 and the range image sensor 20. More specifically, the imaging controller 304 moves the range image sensor 20 along a movement path (hereafter referred to as an actual movement path) or the tentative movement path along which the range image sensor 20 moves in the inspection phase. The imaging controller 304 controls the posture of the robot 10 to move the range image sensor 20. The imaging controller 304 controls the range image sensor 20 to image the workpiece 50 at the multiple imaging positions corresponding to the tentative movement path or to the actual movement path. The imaging controller 304 may change the position and orientation of the workpiece 50.

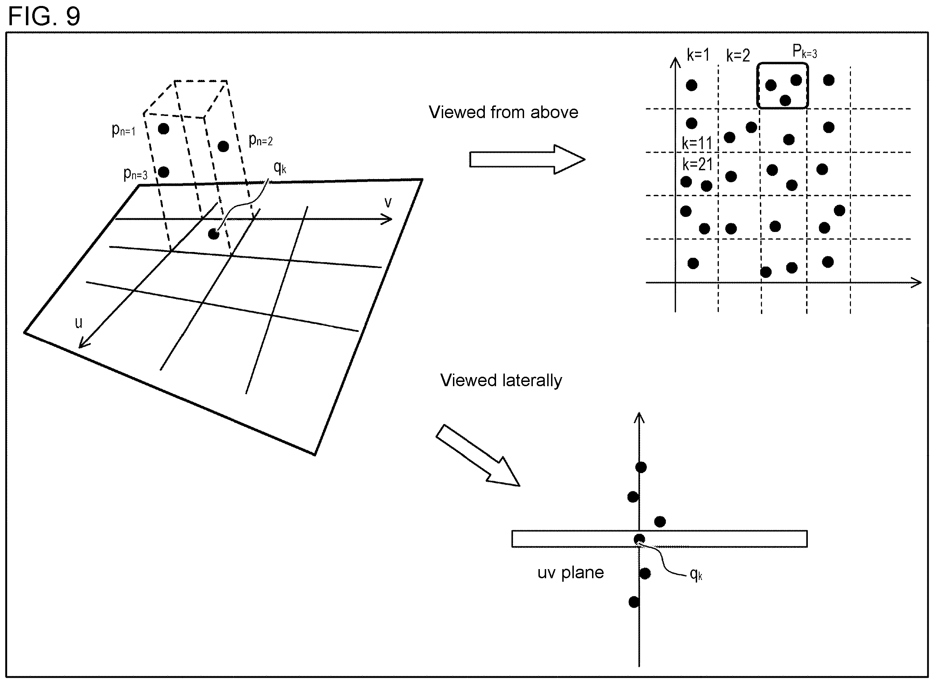

The data generator 305 combines the multiple range images captured by the range image sensor 20 to generate composite data for the workpiece 50. In the present embodiment, similarly to the range images shown in FIG. 9, the composite data may be point cloud data representing the object in the 3D space using the point cloud (sets of multiple points). To generate the composite data by combining the multiple range images, the data generator 305 may, for example, divide the 3D space including the workpiece 50 into multiple spaces (cubes with a predetermined size) and average the positions of the points indicating the object in each divided space in the multiple range images to obtain the point cloud in the composite data (as described later using FIG. 9). Thus, when the coordinates of the point cloud contain zero average noise, the point cloud with less noise can be obtained by combining the multiple range images.

As shown in step 2 in FIG. 7A, the determiner 306 determines, from the N tentative imaging positions, M (M is a natural number satisfying M < N) imaging positions (hereafter referred to as actual imaging positions) for the range image sensor 20 to image the workpiece 50B in the inspection phase. The determiner 306 determines the M actual imaging positions based on the accuracy (measurement accuracy) of the composite data generated by the data generator 305. The measurement accuracy is a value indicating the degree of matching between the workpiece 50A and the composite data. A method for determining (selecting) the actual imaging positions will be described in detail later.

The path generator 307 determines, as shown in step 3 in FIG. 7A, the actual movement path by connecting the M actual imaging positions determined by the determiner 306. In the present embodiment, the path generator 307 determines, as the actual movement path, a path for imaging the workpiece 50 at the M actual imaging positions in a shortest time (inspection takt time). The path for imaging the workpiece 50 at the M actual imaging positions in the shortest time may be determined with any known optimization algorithm. The path generator 307 may determine, as the actual movement path, a path for moving between the M actual imaging positions in the shortest time or at a shortest distance, instead of the path for imaging the workpiece 50 at the M actual imaging positions in the shortest time.

The inspector 308 obtains, from the data generator 305 as a measurement result, the composite data in which M range images of the workpiece 50B captured by the range image sensor 20 at the M actual imaging positions are integrated. The inspector 308 then inspects the workpiece 50B based on the measurement result. The inspector 308 inspects the workpiece 50B by, for example, comparing the shape of the workpiece 50 based on the specification information of the workpiece 50 with the shape of the workpiece 50B shown in the composite data. When, for example, the degree of matching between the shape of the workpiece 50 and the shape of the workpiece 50B shown in the composite data is greater than or equal to a predetermined value, the inspector 308 determines that the workpiece 50B is acceptable.

The output unit 309 outputs the result of inspection by the inspector 308 (acceptability of the workpiece 50B in the inspection). The output unit 309 may also output information about the M actual imaging positions or information about the actual movement path.

In the present embodiment, a single apparatus (information processing apparatus 30) performs the processes of the determination phase and the inspection phase. However, different apparatuses may perform the process of each phase. For example, a determination apparatus (setting apparatus) may perform the process in the determination phase, and an inspection apparatus (measurement apparatus) may perform the process in the inspection phase. In this case, for example, an output unit of the determination apparatus outputs the information about the M actual imaging positions or/and the information about the actual movement path to the inspection apparatus.

The information processing apparatus 30 may be a computer including, for example, a central processing unit (a processor), a memory, and a storage. In this case, the components shown in FIG. 2 are implemented by loading a program stored in the storage into the memory and executing the program with the CPU. The computer may be a general-purpose computer such as a personal computer, a server computer, a tablet, or a smartphone or a built-in computer such as an onboard computer. In some embodiments, some or all of the components shown in FIG. 2 may be formed using an application-specific integrated circuit (ASIC) or a field-programmable gate array (FPGA). In some embodiments, some or all of the components shown in FIG. 2 may be implemented by cloud computing or distributed computing.

[Determination Phase]

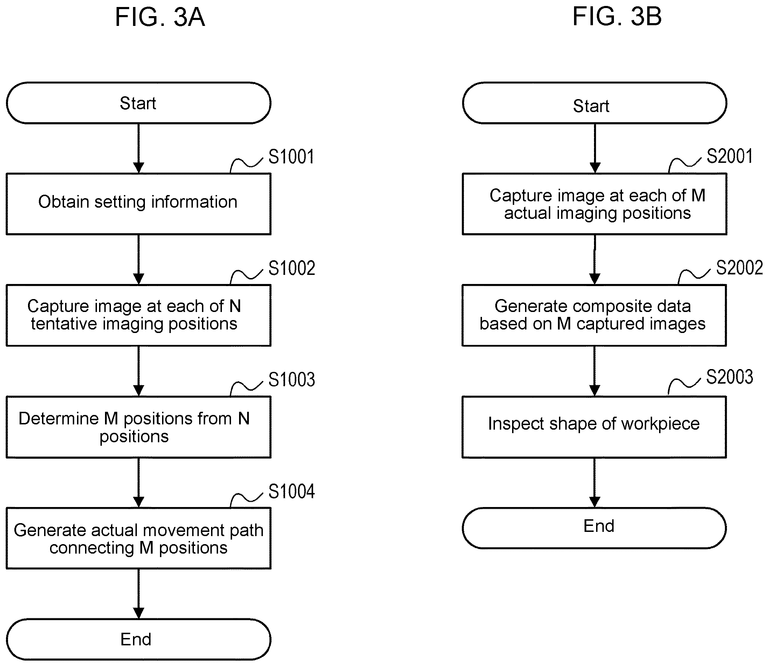

The process performed by the information processing apparatus 30 in the determination phase will now be described with reference to the flowchart in FIG. 3A. Each process in the flowchart of FIG. 3A is performed by the controller 301 executing the program stored in the storage 302.

In step S1001, the controller 301 controls the information obtainer 303 to obtain, from the storage 302, setting information such as the information about the tentative movement path, the information about the N tentative imaging positions, and the specification information about the workpiece 50. The information obtainer 303 may obtain the setting information through the user input.

In step S1002, the controller 301 controls the robot 10 and the range image sensor 20 with the imaging controller 304 to obtain the N range images of the workpiece 50A captured at the N tentative imaging positions. More specifically, the imaging controller 304 controls the posture of the robot 10 so as to move the range image sensor 20 along the tentative movement path and controls the range image sensor 20 so as to obtain the range image when the range image sensor 20 reaches each of the N tentative imaging positions.

In step S1003, the controller 301 controls the data generator 305 and the determiner 306 to determine the M (M < N) actual imaging positions based on the N tentative imaging positions. In the present embodiment, an example of determination of the M actual imaging positions using a greedy selection method will be described. The greedy selection method determines, when K images are already selected and another image is to be added, one of the remaining N to K images that maximizes the evaluation value, and adds the best image to the K images as the selection result for the K + 1 images. In the present embodiment, the evaluation value refers to the measurement accuracy of the composite data generated by the data generator 305 from one or more range images. The measurement accuracy of the composite data is a value based on a variation error D in the point cloud in the composite data as point cloud information. For example, the measurement accuracy may be an inverse of the variation error D. The variation error D will be described in detail later.

In the present embodiment, the determiner 306 first selects the most accurate range image from the N range images. The data generator 305 then combines the selected range image with each of N - 1 range images to generate N - 1 pieces of composite data. The determiner 306 then selects, from the remaining N - 1 range images, another range image that maximizes the measurement accuracy of the composite data when combined with the selected range image. In this state, two range images are selected.

Subsequently, the data generator 305 combines the two selected range images with each of the remaining N - 2 range images to generate N - 2 pieces of composite data. The determiner 306 then selects, from the remaining N - 2 range images, another range image that maximizes the measurement accuracy of the composite data when combined with the two selected range images. The determiner 306 and the data generator 305 repeat these processes until the M range images are selected. The determiner 306 then determines M tentative imaging positions corresponding to the selected M range images as the M actual imaging positions.

As described above, the greedy selection method can determine the K + 1-th range image when the K range images are determined, and thus can determine the M actual imaging positions faster than when most suitable M range images are selected from all possible combinations.

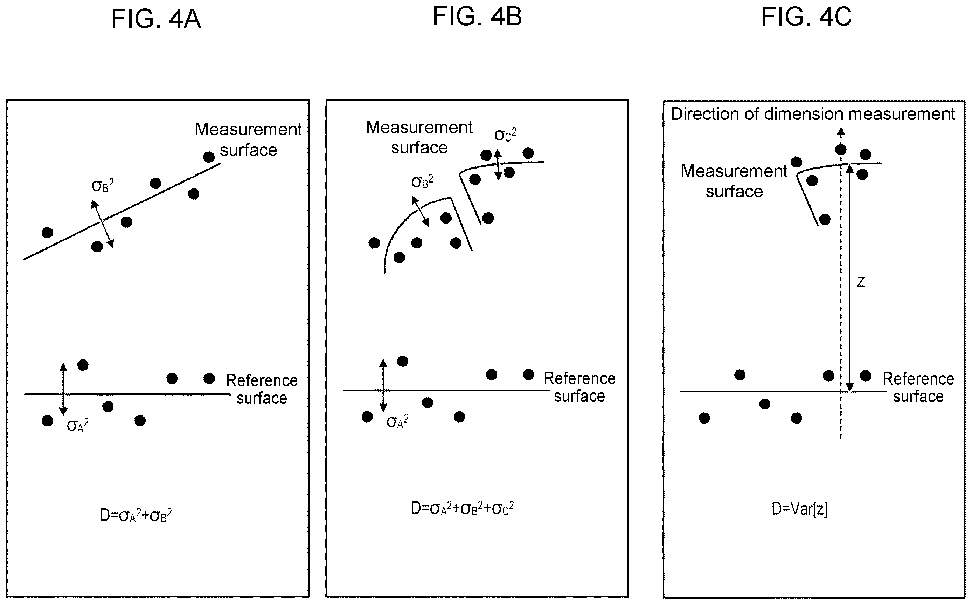

Referring to FIG. 4A, FIG. 4B, and FIG. 4C, an example of calculation of the variation error D (a value corresponding to the measurement accuracy of the composite data) will be described below. The determiner 306 calculates the variation error D that is the variation in the point cloud based on a measurement surface and a reference surface. The measurement surface refers to a surface of the workpiece 50 to be measured. The reference surface refers to a predetermined fixed surface serving as a reference in measuring the workpiece 50. The reference surface may be any surface such as a surface of a platform on which the workpiece 50 is placed. The round dots shown in FIG. 4A, FIG. 4B, and FIG. 4C indicate points of the point cloud information as the composite data.

The shapes and positions of the reference surface and the measurement surface may be determined based on the specification information. For example, the specification information may include information (plane information) about the shapes and positions of the reference surface and the measurement surface. In this case, the user specifies more information, which increases the workload on the user but allows more accurate calculation of the variation error D. The specification information may include the information about the shape and position of one of the surface and information about the surface smoothness of the other surface, or it may have the information about the surface smoothness of both surfaces. When the specification information includes the information about the surface smoothness of the surface(s), the shape and position of the surface(s) can be determined by approximating each point in the composite data as the point cloud information on a curved surface with the same surface smoothness. The specification information may also include information about an edge of the reference surface and an edge of the measurement surface to determine the shapes and positions of the reference surface and the measurement surface based on the specification information.

FIG. 4A is a diagram describing a method for calculating the variation error D when the measurement surface is planar. When the measurement surface is a single surface, the determiner 306 calculates, as the variation error D, a total of a variance $\sigma_A^2$ among distances between points around the reference surface and the reference surface and a variance $\sigma_B^2$ among distances between points around the measurement surface and the measurement surface. In other words, the determiner 306 calculates the variation error D based on the variation in the point cloud with respect to the reference surface and the variation of the point cloud with respect to the measurement surface.

FIG. 4B is a diagram describing a method for calculating the variation error D when the measurement surface is nonplanar (e.g., curved). When the measurement surface includes two surfaces, the determiner 306 calculates, as the variation error D, a total of a variance $\sigma_A^2$ among distances between the points around the reference surface and the reference surface, a variance $\sigma_B^2$ among distances between points around a first measurement surface and the first measurement surface, and a variance $\sigma_C^2$ among distances between points around a second measurement surface and the second measurement surface.

The variation error D can be calculated when the shape and position of the reference surface alone can be grasped based on the specification information (for example, when the specification information includes only the information about the shape and position of the reference surface), even if the shape and position of the measurement surface cannot be grasped based on the specification information. For example, the determiner 306 may determine, as the variation error D, the variance among the distances between points around the reference surface and the reference surface.

FIG. 4C is a diagram describing a method for calculating the variation error D with an algorithm for calculating dimension measurement indices based on the point cloud information. In this case, the determiner 306 performs 3D model fitting for the reference surface and the measurement surface and calculates a dimension z based on the relative positional relationship between the reference surface and the measurement surface. The determiner 306 then calculates, as the variation error D, var[z] being the variance of the dimension z.

The measurement accuracy of the composite data is calculated based on the variation error D as described above, but it may also be calculated with any other method that can calculate the measurement accuracy of the composite data. For example, the determiner 306 may perform the same process as the inspection performed by the inspector 308 and use the value indicating acceptability in the inspection as the measurement accuracy. For example, the specification information may include the information about the 3D model of the workpiece 50, and the determiner 306 may use, as the measurement accuracy of the composite data, the degree of matching between the 3D model in the specification information and the 3D model in the composite data generated by the data generator 305.

In step S1004, the controller 301 controls the path generator 307 to generate the actual movement path connecting the M actual imaging positions to one another. More specifically, the path generator 307 generates the actual movement path that allows imaging at the M actual imaging positions to be complete in the shortest time (inspection takt time). The path generator 307 can calculate, for example, the time for moving between the M actual imaging positions based on information about the operation speed and operation range of the robot 10. The path generator 307 can also calculate, for example, imaging time at each actual imaging position based on setting information including the exposure time of the range image sensor 20. The path generator 307 then calculate the time for completing imaging at the M actual imaging positions by adding the total imaging time at each of M actual imaging positions and the time for moving between the M actual imaging positions.

The M actual imaging positions are also included in the tentative movement path. Therefore, as shown in FIG. 7B, the path generator 307 may use the tentative movement path as the actual movement path. The process in the determination phase can be simplified when using the tentative movement path as the actual movement path. This is also useful when the movement path serves as a part of the assembling operation of the robot 10, and the movement path is unchangeable from a predetermined path.

When the actual movement path and the actual imaging positions are determined as described above, the inspection system 1 can generate, even using fewer range images captured at fewer imaging positions in the inspection phase, the composite data with the measurement accuracy maintained. This allows inspection of the workpiece 50B with fewer processes and high accuracy.

[Inspection Phase]

The process performed by the information processing apparatus 30 in the inspection phase will now be described with reference to the flowchart of FIG. 3B. The processing in the flowchart of FIG. 3B is performed by the controller 301 executing the program stored in the storage 302.

In step S2001, the controller 301 controls the robot 10 and the range image sensor 20 via the imaging controller 304. The controller 301 then obtains the M range images of the workpiece 50B captured from the M actual imaging positions. More specifically, the imaging controller 304 controls the posture of the robot 10 so as to move the range image sensor 20 along the actual movement path and controls the range image sensor 20 so as to obtain the range image when the range image sensor 20 reaches one of the M actual imaging positions.

In step S2002, the controller 301 controls the data generator 305 to integrate the M range images captured in step S2002 and generates composite data for the workpiece 50B. This allows the data generator 305 to obtain the composite data as the measurement result of the workpiece 50B.

In step S2003, the controller 301 controls the inspector 308 to inspect the workpiece 50 based on the composite data for the workpiece 50B.

The process in the inspection phase may include assembly of the workpiece 50B. For example, the range image sensor 20 may be adjacent to a gripper in the robot 10 and perform imaging at the actual imaging positions and inspection at operation positions for picking and assembling components. This can reduce the total time for the inspection and the assembly.

In the present embodiment, as described above, the inspection system 1 narrows down, based on the measurement accuracy of the composite data, the number of actual imaging positions for the range image sensor 20 to perform imaging in the inspection phase. This allows highly accurate inspection of the workpiece 50B in the inspection phase even when using a small number of range images captured by the range image sensor 20 at a small number of imaging positions. This can reduce the imaging processes while maintaining the accuracy of inspection (measurement) in the inspection phase.

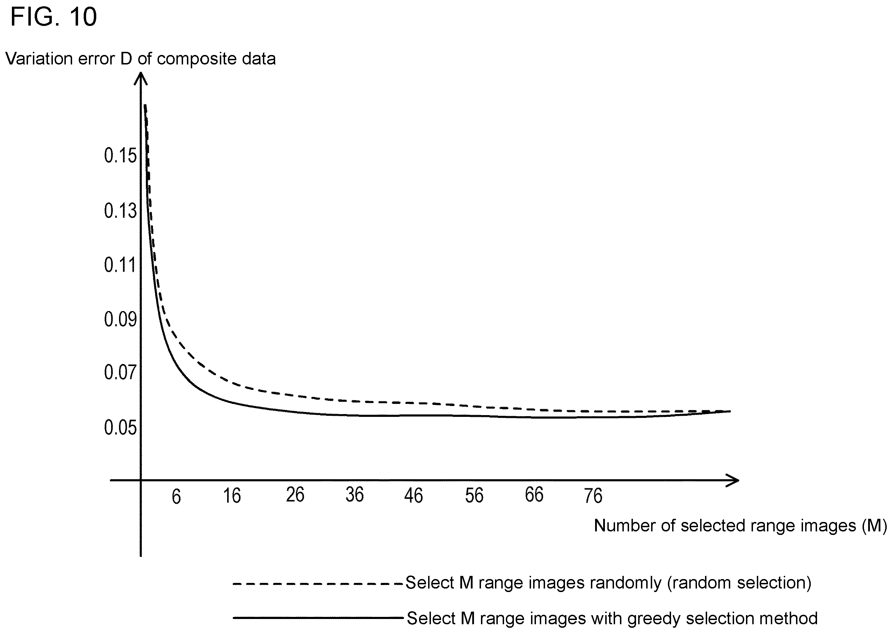

In an experiment conducted by the inventors, as shown in the graph in FIG. 10, the number of captured range images to achieve the same level of variation error D could be greatly reduced. More specifically, composite data generated from range images captured from 12 actual imaging positions determined as described in the present embodiment shows the measurement accuracy similar to the measurement accuracy of composite data in which range images captured by the range image sensor 20 at 20 selected imaging positions are combined.

The processing in step S1004 may not be performed in the determination phase, but the inspection system 1 may use the tentative movement path as the actual movement path to image the workpiece 50B from the M actual imaging positions in the inspection phase.

In the present embodiment, the imaging controller 304 changes the imaging positions by moving the range image sensor 20 without moving the workpiece 50A or the workpiece 50B. The imaging positions may not necessarily be absolute positions of the range image sensor 20 but may be relative positions of the range image sensor 20 to the workpiece 50. The imaging controller 304 may thus change the imaging positions by moving the workpiece 50A or the workpiece 50B without moving the range image sensor 20. In other words, the actual movement path may be a path along which the workpiece 50A moves, and the tentative movement path may be a path along which the workpiece 50B moves. Further, the imaging controller 304 may change the imaging positions by moving the range image sensor 20, and also moving the workpiece 50A or the workpiece 50B. By moving both of the range image sensor 20 and the workpiece 50, the range image sensor 20 can complete the imaging at the multiple imaging positions more quickly.

[First Variation]

In the first embodiment, the inspection system 1 determines the M actual imaging positions with the greedy selection method. However, in step S1003, multiple pieces of composite data may be generated from the M range images, and M points corresponding to pieces of composite data with high accuracy may be determined as the actual imaging positions. The processing in step S1003 in the present variation will be described in detail below.

In step S1003, the controller 301 controls the data generator 305, selects the M range images from the N range images and generates the composite data (point cloud data) based on the M range images. The data generator 305 generates the composite data based on the M range images for all combinations of the M range images selected from the N range images. In other words, the data generator 305 generates the number of $_nC_m = (n(n-1)...(n-m+1))/(m(m-1)...1)$ pieces of generated data. The data generator 305 may not necessarily generate the composite data for all combinations, but may generate the composite data for arbitrary number of combinations.

The controller 301 then controls the determiner 306 to determine the M actual imaging positions based on the N tentative imaging positions. More specifically, the determiner 306 first calculates the measurement accuracy of the multiple pieces of composite data generated by the data generator 305. Subsequently, the determiner 306 determines, as the actual imaging positions, the M tentative imaging positions corresponding to the composite data with the highest measurement accuracy among the multiple pieces of composite data.

Any combinatorial optimization method may be used other than the greedy selection method or the determination method (combinatorial optimization method) in the present variation, such as a method using, for example, the mixed integer quadratic programming problem.

Referring to FIG. 9, an example method which can be attributed to a {0, 1} optimization problem to select, using the mixed integer quadratic programming problem, a more suitable combination than with the greedy selection method will be described below. The method divides realizations with multiple spaces (voxel meshes) and calculates an ensemble average in each space to specifically indicate an evaluation function. In FIG. 9, all points in the point cloud in the N range images are arranged in the 3D space as they are. The point cloud included in the k-th voxel mesh in the n-th range image is represented by a collection of $p \in P_{k,n}$. In other words, k is an index of the voxel mesh, and n is an index of the N range images. A representative coordinate of the k-th voxel mesh is represented as $r_k$. The representative coordinate $r_k$ corresponds to the average of the point cloud coordinates in selected range images and is expressed by Formula 1 below. In other words, the representative coordinate $r_k$ corresponds to, when the data generator 305 combines the selected range images to generate the composite data, a representative coordinate of the k-th voxel mesh in the composite data. Thus, the data generator 305 in this example also generates multiple pieces of composite data for multiple different combinations of the N range images.

[Math. 1]

$$r_k = \frac{1}{\sum_n x_n |P_{k,n}|} \sum_{n=1}^{N} x_n \sum_{p \in P_{k,n}} p \quad \cdots \quad (1)$$

In this formula, $x = (x_1, x_2, ..., x_N)^\top \in \{0, 1\}^N$ is a selection vector in the N range images, which is t1 when selected and is 0 when not selected. When the point cloud in the same range image is averaged in advance, Formula 1 can be transformed to Formula 2 below.

[Math. 2]

$$r_k = \frac{1}{\sum_n x_n} \sum_{n=1}^{N} x_n p_{k,n} \cdots \quad (2)$$

A target coordinate value (a target coordinate) for the representative coordinate $r_k$ calculated as described above is represented as a target coordinate $q_k$. The target coordinate $q_k$ may be determined arbitrarily. For example, the determiner 306 may determine, as the target coordinate $q_k$, an intersection between a fitted uv plane in FIG. 9 and a voxel mesh or between a smoothly curved plane and a voxel mesh, or may average the coordinates of all N range images to calculate the target coordinate $q_k$ in a voxel mesh. Using these, a square sum J of a fitting error, which is to be minimized in selection, between the representative coordinate $r_k$ and the target coordinate $q_k$ is expressed by Formula 3. The square sum J of the fitting error can be used similarly to the variation error D described above. In other words, the measurement accuracy indicating the degree of matching with the workpiece 50 is greater when the square sum J of the fitting error is smaller.

$$[J = \sum_{k=1}^{K} \|q_k - r_k\|^2 = \sum_{k=1}^{K} \|q_k - r_k\|^2$$

$$J = \sum_{k=1}^{K} \|q_k - r_k\|^2 = \sum_{k=1}^{K} \|q_k - r_k\|^2 \quad \cdots \quad (3)$$

In the above Formula 3, when the number of elements selected from the N range images is M (constant), an evaluation function J as the square sum of the fitting error is expressed as a quadratic expression as in Formula 4 below.
[Math. 4]

$$J = \sum_{k=1}^{K} \left\| q_k - \frac{1}{M} \sum_{n=1}^{N} x_n p_{k,n} \right\|^2$$

$$= \frac{1}{M^2} \sum_{i,j,k} x_i x_j \langle p_{k,i}, p_{k,j} \rangle - \frac{2}{M} \sum_{k,n} x_n \langle p_{k,n}, q_k \rangle + \sum_k \| q_k \|^2$$

$$= x^T Q x + \langle b, x \rangle + c$$

$$\cdots \quad (4)$$

Q and b in Formula 4 are defined as in Formulas 5 and 6 below.

[Math. 5]

$$[Q]_{i,j} = \sum_k \frac{\langle p_{k,i}, p_{k,j} \rangle}{M^2} \quad \cdots \quad (5)$$

$$[b]_n = -\sum_k \frac{2 \langle p_{k,n}, q_k \rangle}{M} \quad \cdots \quad (6)$$

With a restrictive condition of the number of selected elements being M (constant), the final evaluation function J to be minimized is expressed by Formula 7.
[Math. 6]

$$J = x^T Q x + \langle b, x \rangle + \lambda (\sum_n x_n - M)^2 = x^T Q' x + \langle b', x \rangle \quad \cdots \quad (7)$$

The process of minimizing the evaluation function J within a range of $x \in \{0, 1\}^N$ is known as a quadratic unconstrained binary optimization (QUBO). An optimum combination can be obtained using dedicated hardware or a mathematical programming solver such as an Ising machine or a graphics processing unit (GPU). The determiner 306 can select, as the M range images, the range images with which x = 1 when the evaluation function J is minimized (when the measurement accuracy is maximized). The determiner 306 can further determine, as the M actual imaging positions, the M tentative imaging positions corresponding to the M range images.

Second Modification

In the first embodiment, the N tentative imaging positions are determined by the user input, but it may also be determined by the inspection system 1. For example, with p (p < N) tentative imaging positions determined, the determiner 306 may determine N tentative imaging positions based on imaging results of the workpiece 50A from the p tentative imaging positions by repeating the process of determining the next (p+1) tentative imaging positions. For example, the determiner 306 preferentially determines, as the (p + 1)th tentative imaging position, an imaging position located within a predetermined range (e.g., within a radius of 5 cm or less) from the p-th tentative imaging position and from which no occlusion occurs to hide the workpiece 50A with other objects, an imaging position from which a portion of the workpiece 50A that is not yet to be imaged from the p tentative imaging positions can be imaged, or both positions.
In the present variant, the suitable N tentative imaging positions can be selected so as to avoid any situation such as occlusion, which cannot be known until the object is actually imaged.

<Second Embodiment>

In the first embodiment, the inspection system 1 determines the M actual imaging positions simply based on the measurement accuracy (variation error D) of the composite data in step S1003. However, the inspection system 1 may determine the M actual imaging positions based on the time for the range image sensor 20 to complete imaging.

An example in which, with the K range images selected, the inspection system 1 selects the (K + 1)th range image in step S1003 will be described below. In this example, first, the data generator 305 generates N - K pieces of composite data, intergarating the K range images and each of the remaining N - K range images. The determiner 306 calculates, for each of the K + 1 pieces of composite data, the measurement accuracy and the shortest time (inspection takt time) for the range image sensor 20 to complete imaging at the K + 1 tentative imaging positions corresponding to the composite data. The determiner 306 then selects K + 1 range images corresponding to the composite data, among the multiple pieces of composite data, having the greatest value obtained by dividing the measurement accuracy by the inspection takt time. Instead of the value obtained by dividing the measurement accuracy by the inspection takt time, the determiner 306 may select the K + 1 range images using an arbitrary value that takes a larger value for higher measurement accuracy and a larger value for a smaller value of the inspection takt time.

This allows determination of the M actual imaging positions to improve a balance between the time for the imaging processes and inspection accuracy. This can maintain the high inspection accuracy while reducing the time for the imaging processes.

< Third Embodiment>

In the first and second embodiments, a single actual movement path is generated from a single corresponding tentative movement path in the determination phase. However, one actual movement path may be generated based on multiple tentative movement paths (three tentative movement paths with L=1 to 3 in the example in FIG. 8). In this case, the N tentative imaging positions are previously set for each of the multiple tentative movement paths. The value N may be different for each of the multiple tentative movement paths.

In this case, the storage 302 stores information about L tentative movement paths and tentative imaging positions corresponding to the L tentative movement paths. In step S1001, the controller 301 controls the information obtainer 303 to obtain the information about the L tentative movement paths and the information about the L $\times$ N tentative imaging positions corresponding to the L tentative movement paths. In step S1002 (step 1 in FIG. 8), the controller 301 controls the imaging controller 304 toto capture images of the workpiece 50A by the range image sensor 20 at the L pieces $\times$ N points tentative imaging positions.

In step S1003 (step 2 in FIG. 8), the controller 301 controls the data generator 305 and the determiner 306 to determine, for each of the L tentative movement paths, candidates for the M actual imaging positions using the same method as in the first embodiment. The data generator 305 then generates, for each of the L tentative movement paths, the composite data by combining the range images captured from the candidates for the M actual imaging positions.

In step S1004, the controller 301 controls the path generator 307 to select a single tentative movement path corresponding to the composite data with the highest measurement accuracy from all pieces of composite data corresponding to the L tentative movement paths. The path generator 307 then generates the actual movement path based on the M actual imaging positions in one selected tentative movement path. The path generator 307 may use the selected one tentative movement path as the actual movement path without processing (step 3 in FIG. 8). The determiner 306 determines, as the M actual imaging positions, the candidates for the M actual imaging positions corresponding to the selected one tentative movement path.

In a third embodiment, the optimum actual movement path can be generated (the M actual imaging positions are determined) from many tentative movement paths, and thus the M actual imaging positions can be determined for inspection with higher accuracy. This further increases the inspection accuracy of the workpiece 50B.

<Fourth Embodiment>

In the first embodiment, the value M as the number of actual imaging positions is determined (previously set) based on the user input, it may be determined by the inspection system 1. In a fourth embodiment, an upper limit for imaging time (an upper-limit takt time T, or a threshold) in the inspection phase is previously set. The inspection system 1 determines, as the value M which is the number of actual imaging positions, the number of range images with which the inspection takt time is the greatest within a range below the upper-limit takt time T.

In the present embodiment, only the processing in step S1003 differs from the first embodiment, therefore the processing in place of the processing in step S1003 will be described.

In the fourth embodiment, in the processing in place of the processing in step S1003, the controller 301 controls the determiner 306 to select one range image at a time from the N range images with the greedy selection method. The determiner 306 determines, when selecting each range image, whether the inspection takt time that is the shortest time in which the tentative imaging positions corresponding to all selected range images are connected is smaller than or equal to the upper-limit takt time T. When the inspection takt time is smaller than or equal to the upper-limit takt time T, the determiner 306 selects another range image and repeats comparing the inspection takt time with the upper-limit takt time T. In contrast, when the inspection takt time is greater than the upper-limit takt time T, the determiner 306 discards the last selected range image (for example, K-th range image) and determines, as the K - 1 actual imaging positions, the K - 1 tentative imaging positions corresponding to the K - 1 range images selected the first to (K - 1)th. In other words, the determiner 306 determines K - 1 as the value M, the number of actual imaging positions.

In the present embodiment, suitable actual imaging positions can be determined with a time limitation for the imaging processes in the inspection phase. In other words, the workpiece 50B can be inspected with high accuracy with the time limitation for the imaging processes in the inspection phase. The user can also readily predetermine the value M as the number of actual imaging positions.

<Fifth Embodiment>

In the fourth embodiment, the inspection system 1 determines the value M as the number of actual imaging positions as appropriate for the upper-limit takt time T. However, the inspection system 1 may present the relationship between the inspection takt time and the variation error D to the user to allow the user to determine, based on the relationship, the value M as the number of actual imaging positions.

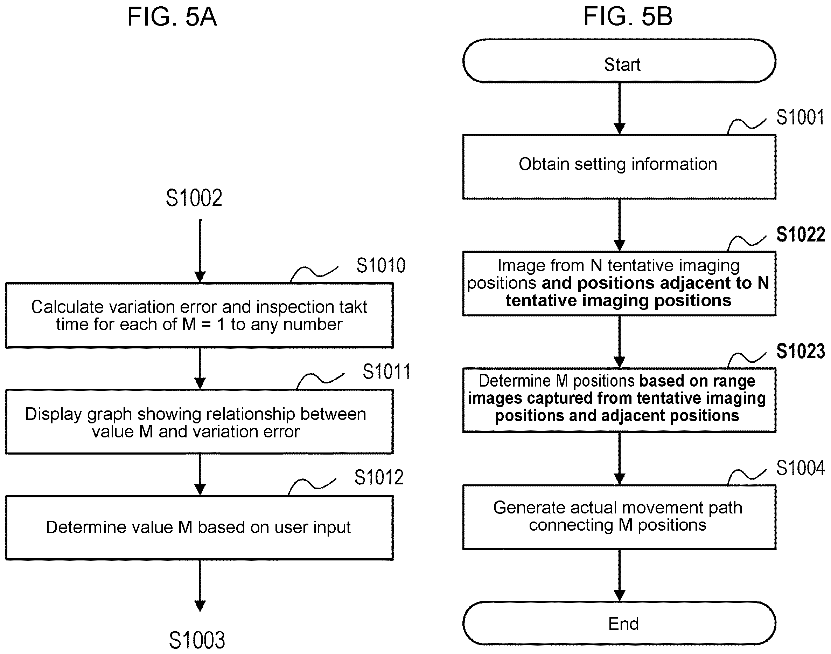

In other words, as shown in FIG. 5A, the processing in steps S1010 to S1012 for determining the value M may be performed between steps S1002 and S1003.

In step S1010, the controller 301 controls the determiner 306 to calculate a variation error D (measurement accuracy) when the value M as the number of actual imaging positions corresponds to any range and calculate the value of the inspection takt time corresponding to the variation error D. This value is obtained by, for example, calculating the variation error D of the composite data combining all selected range images for each range image selected by the greedy selection method and calculating the inspection takt time corresponding to the composite data (all selected range images).

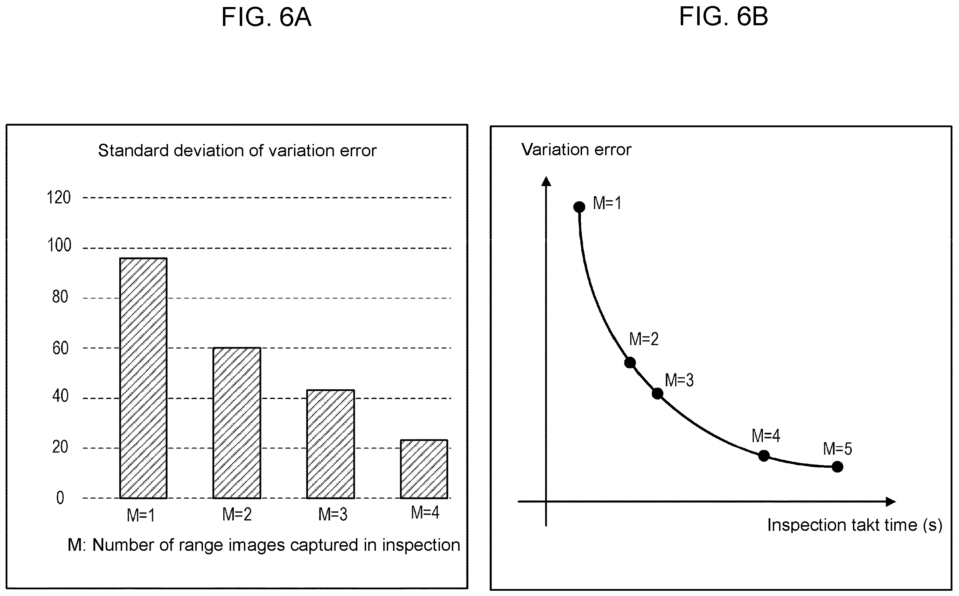

In step S1011, the controller 301 displays, as shown in FIG. 6A, a graph showing the relationship between the value M as the number of actual imaging positions (the number of images captured in the inspection) and the variation error D (measurement accuracy) on a display (not shown). The controller 301 may display, as shown in FIG. 6B, a graph showing the relationship between the value M as the number of actual imaging positions, the variation error D (measurement accuracy), and the inspection takt time on the display.

In step S1012, the controller 301 receives the user input and determines a value input by the user as the value M as the number of actual imaging positions.

In the present embodiment, the graph showing the relationship between the value M as the number of actual imaging positions and the variation error D (measurement accuracy) is displayed, allowing the user to determine the measurement accuracy corresponding to the value M as the number of actual imaging positions and easily determine the effect of the value M on the inspection. With the graph in FIG. 6B being displayed, the user can determine an overview of the relationship between the measurement accuracy and the inspection takt time and then can determine an intended balance between the inspection takt time and the measurement accuracy. This allows the user to easily and appropriately determine the value M as the number of actual imaging positions.

<Sixth Embodiment>

In the first embodiment, the inspection system 1 determines the M actual imaging positions based on the N range images captured from the N tentative imaging positions. In a sixth embodiment, the M actual imaging positions are determined based on the range images captured from the N tentative imaging positions and positions adjacent to the N tentative imaging positions.

In the sixth embodiment, in place of the processing in steps S1002 and S1003 in the determination phase in FIG. 3A in the first embodiment, the processing in steps S1022 and S1023 is performed as shown in FIG. 5B. The other processing in the sixth embodiment is the same as in the first embodiment and will thus not be described in detail.

In step S1022, the controller 301 controls the imaging controller 304 to cause the range image sensor 20 to capture images of the workpiece 50A at the N tentative imaging positions and the adjacent positions adjacent to the N tentative imaging positions. More specifically, the imaging controller 304 causes the range image sensor 20 to capture an image of the workpiece 50A at each of the N tentative imaging positions and q imaging positions (q adjacent positions) adjacent to each of N tentative imaging positions. The range image sensor 20 thus obtains N (q + 1) range images of the workpiece 50A captured from N (q + 1) imaging positions. Each tentative imaging position has the constant (same) relative positional relationship with the adjacent positions adjacent to the imaging position. In other words, a first tentative imaging position and the q adjacent positions adjacent to the first tentative imaging position have the same relative positional relationship as a second tentative imaging position and the q adjacent positions adjacent to the second tentative imaging position.

In step S1023, the controller 301 controls the data generator 305 and the determiner 306 to determine the M actual imaging positions based on the N tentative imaging positions. The data generator 305 combines each of the N range images and range images captured from the q adjacent positions adjacent to the tentative imaging position at which the range image is captured as an image set. In this case, the data generator 305 generates multiple pieces of composite data from different combinations of N image sets (sets of a range image captured at a single imaging position and q range images captured at positions adjacent to the imaging position). The determiner 306 then selects M image sets from the N image sets, using any combination optimization method as described above and based on the measurement accuracy of the multiple pieces of composite data in which the multiple image sets are combined. In this case, the determiner 306 may determine, as the M actual imaging positions, the M tentative imaging positions corresponding to the selected M image sets.

A specific example in which the M actual measurement positions are determined with the greedy selection method as in the first embodiment will be described below. However, unlike the first embodiment, the range images captured from the positions adjacent to the N tentative imaging positions are also used.

A method for selecting a (K + 1)th range image when the K range images are selected will now be described. The K range images are captured from K positions among the N tentative imaging positions. (1) The data generator 305 first generates (N - K) (q + 1) pieces of composite data in which K image sets corresponding to the K range images, range images captured at the remaining N - K tentative imaging positions, and range images captured at the (N - K)q imaging positions adjacent to the N - K tentative imaging positions are combined. (2) The determiner 306 then calculates the measurement accuracy for each of the (N - K) (q + 1) pieces of composite data. (3) Subsequently, the determiner 306 calculates, as average measurement accuracy for each of the N - K tentative imaging positions, an average of the measurement accuracy of the composite data corresponding to each of the N - K tentative imaging positions and the measurement accuracy of q pieces of composite data corresponding to the adjacent positions adjacent to each of the N - K tentative imaging positions. The average measurement accuracy for each of the N - K tentative imaging positions can be the measurement accuracy of each of the N - K pieces of composite data in which the K images sets and each of N - K image sets corresponding to each of the N - K tentative imaging positions are combined. (4) Finally, the determiner 306 selects, as a (K + 1)th range image, the range image captured from the tentative imaging position with the highest average measurement accuracy among all average values of the measurement accuracy for all the N - K tentative imaging positions.

The determiner 306 selects the M range images as described above and determines, as the M actual imaging positions, the M tentative imaging positions corresponding to the selected M range images.

When the workpiece 50 is imaged from the same imaging position in the determination phase and in the inspection phase, the workpiece 50 may be, for example, displaced between the two phases, which may vary the measurement accuracy greatly. In the sixth embodiment, the actual imaging positions are determined based on the range images captured at the positions adjacent to the tentative imaging positions. This reduces the variation in measurement accuracy caused by the displacement of the workpiece 50 between the determination phase and the inspection phase. This can thus stably maintain high measurement accuracy of inspection in the inspection phase.

[Third Modification]

In the sixth embodiment, the inspection system 1 determines the M actual imaging positions based on the range images captured by the range image sensor 20 at the N tentative imaging positions and the positions adjacent to the N tentative imaging positions. In the present modification, the inspection system 1 may use, in place of the range images captured at the N tentative imaging positions and the positions adjacent to the N tentative imaging positions, range images of W workpieces 50 (teaching objects) including the workpiece 50A each captured from the N tentative imaging positions. The W workpieces 50 other than the workpiece 50A are each arranged at the same position and in the same orientation as the workpiece 50A.

In other words, in the third modification, the data generator 305 generates, for each of the N range images, an image set that is a combination of W range images of the W workpieces 50. The determiner 306 may then select the M image sets from the N image sets, using any combination optimization method and based on the measurement accuracy of the multiple pieces of composite data in which multiple different combinations of multiple image sets are combined. In this case, the determiner 306 may determine, as the M actual imaging positions, the M tentative imaging positions corresponding to the selected M image sets.

The use of the range images of the multiple workpieces 50 (teaching objects) that are different from one another allows the workpiece 50A having a distinctive defect to be replaced with another workpiece 50. In other words, this can reduce the individual variations among the workpieces 50.

The scope of the claims is construed without being limited to the features described in the embodiments described above. The scope of the claims is construed to include the scope understandable by those skilled in the art to solve intended issues in view of the common technical knowledge at the time of filing.

REFERENCE SIGNS LIST

| 1 | inspection system |
| 10 | robot |
| 20 | range image sensor |
| 30 | information processing apparatus |
| 40 | control server |
| 50 | workpiece |
| 60 | network |
| 301 | controller |
| 302 | storage |
| 303 | information obtainer |
| 304 | imaging controller |
| 305 | data generator |
| 306 | determiner |
| 307 | path generator |
| 308 | inspector |
| 309 | output unit |

**Claims**

1. An information processing system (1) for a measurement apparatus configured to perform measurement of an object (50B) three-dimensionally using a plurality of range images obtained at different imaging positions by a range image sensor (20) configured to obtain a range image using a principle of triangulation, the information processing system (1) being a system for determining imaging positions at which M range images that should be used in the measurement of the object (50B) are captured, the information processing system (1) comprising:

   an imaging controller (304) configured to control and move the range image sensor (20) to N imaging positions and obtain N range images of a teaching object (50A) at the N imaging positions, where N > M;
   a data generator (305) configured to generate a plurality of composite data pieces from a plurality of different combinations of the N range images; and
   a determiner (306) configured to calculate accuracy of each of the plurality of composite data pieces indicating a degree of matching between the composite data piece and the teaching object (50A) and to determine M imaging positions from the N imaging positions based on the accuracy of each of the plurality of composite data pieces.

2. The information processing system (1) according to claim 1, wherein

   each of the plurality of composite data pieces is point cloud data representing the object (50B) in a three-dimensional space using a point cloud, and
   the accuracy is a value in accordance to a variation in the point cloud with respect to the teaching object (50A).

3. The information processing system (1) according to claim 2, wherein
   the variation in the point cloud is based on variations of points in the plurality of composite data pieces with respect to a predetermined reference surface and on variations of points in the plurality of composite data pieces with respect to a surface of the teaching object (50A).

4. The information processing system (1) according to any one of claims 1 to 3, further comprising:
   a path generator (307) configured to generate a movement path for changing a position of the range image sensor (20) to the M imaging positions to allow the range image sensor (20) to complete imaging the object (50B) at the M imaging positions in a shortest time.

5. The information processing system (1) according to any one of claims 1 to 4,
   wherein

the determiner (306) determines the M imaging positions based on the accuracy and time for imaging used by the range image sensor (20).

6. The information processing system (1) according to any one of claims 1 to 5, further comprising:

an obtainer (303) configured to obtain a plurality of tentative movement paths each including the N imaging positions and each being a movement path of the range image sensor (20),
wherein, for each of the plurality of tentative movement paths,

the imaging controller (304) obtains the N range images,
the data generator (305) generates the plurality of composite data pieces, and
the determiner (306) determines candidates for the M imaging positions based on the accuracy of each of the plurality of composite data pieces, and

the determiner (306) selects one tentative movement path from the plurality of tentative movement paths and determines M candidates for the M imaging positions corresponding to the selected one tentative movement path as the M imaging positions.

7. The information processing system (1) according to any one of claims 1 to 6, wherein

the range image sensor (20) has a predetermined upper limit for time for imaging, and
the M is a greatest number of range images to be captured by the range image sensor (20) until the time for imaging used by the range image sensor (20) reaches the predetermined upper limit.

8. The information processing system (1) according to any one of claims 1 to 6, further comprising:

a controller (301) configured to control a display to display a graph showing a relationship between a number of imaging positions determined by the determiner (306) and the accuracy,
wherein the M is a number input by a user after the graph is displayed.

9. The information processing system (1) according to claim 8, wherein
the controller (301) controls the display to display a graph showing a relationship between time for imaging used by the range image sensor (20), the number of imaging positions determined by the determiner (306), and the accuracy.

10. The information processing system (1) according to any one of claims 1 to 9, wherein

the determiner (306) selects a most accurate range image from the N range images,
the determiner (306) further repeatedly selects, until the M range images are selected, another range image from unselected images of the N range images based on the accuracy of each of composite data pieces generated from combinations of the unselected images of the N range images and all selected images of the N range images, and
the determiner (306) determines, from the N imaging positions, the M imaging positions corresponding to the selected M range images.

11. The information processing system (1) according to any one of claims 1 to 10, wherein

the imaging controller (304) further obtains range images of the teaching object (50A) captured with the range image sensor (20) at adjacent positions that are in a constant positional relationship to each of the N imaging positions, and
the data generator (305) generates the plurality of composite data pieces from a plurality of different combinations of N image sets, and each of the N image sets includes a range image captured at one of the N imaging positions and a range image captured at an adjacent position of the adjacent positions for the one of the N imaging positions.

12. The information processing system (1) according to any one of claims 1 to 11, wherein

the imaging controller (304) further obtains range images of W teaching objects including the teaching object (50A), and the range images of each of the W teaching objects are captured with the range image sensor (20) at the N imaging positions, and

the data generator (305) generates the plurality of composite data pieces from a plurality of different combinations of N image sets, and each of the N image sets includes W range images of the W teaching objects captured at one of the N imaging positions.

13. The information processing system (1) according to any one of claims 1 to 12, wherein

the information processing system (1) includes the measurement apparatus, and
the measurement apparatus obtains, as a result of the measurement of the object (50B), composite data of the M range images of the object (50B) captured by the range image sensor (20) at the M imaging positions.

14. An information processing method for a measurement apparatus configured to perform measurement of an object (50B) three-dimensionally using a plurality of range images obtained at different imaging positions by a range image sensor (20) configured to obtain a range image using a principle of triangulation, the information processing method being a method for determining imaging positions at which M range images that should be used in the measurement of the object (50B) are captured, the information processing method comprising:

controlling and moving the range image sensor (20) to N imaging positions and obtaining N range images of a teaching object (50A) at the N imaging positions, where N > M;
generating a plurality of composite data pieces from a plurality of different combinations of the N range images; and
calculating accuracy of each of the plurality of composite data pieces indicating a degree of matching between the composite data piece and the teaching object (50A) and determining M imaging positions from the N imaging positions based on the accuracy of each of the plurality of composite data pieces.

15. A program for causing a computer to perform each step of the operations included in the information processing method according to claim 14, when used with an information processing system as defined in any of claims 1-13.


**Patentansprüche**

1. Informationsverarbeitungssystem (1) für eine Messvorrichtung, die dazu eingerichtet ist, eine Messung eines Objekts (50B) dreidimensional unter Verwendung mehrerer Entfernungsbilder durchzuführen, die an verschiedenen Bildgebungspositionen durch einen Entfernungsbildsensor (20) erlangt werden, der dazu eingerichtet ist, ein Entfernungsbild unter Verwendung eines Triangulationsprinzips zu erlangen, wobei das Informationsverarbeitungssystem (1) ein System zum Bestimmen von Bildgebungspositionen ist, an denen M Entfernungsbilder, die bei der Messung des Objekts (50B) verwendet werden sollen, aufgenommen werden, wobei das Informationsverarbeitungssystem (1) umfasst:

eine Bildgebungs-Steuerung (304), die dazu eingerichtet ist, den Entfernungsbildsensor (20) zu N Bildgebungspositionen zu steuern und zu bewegen und N Entfernungsbilder eines Lehrobjekts (50A) an den N Bildgebungspositionen zu erlangen, wobei N > M ist;
einen Datengenerator (305), der dazu eingerichtet ist, mehrere zusammengesetzte Datenstücke aus mehreren verschiedenen Kombinationen der N Entfernungsbilder zu generieren; und
eine Bestimmungsvorrichtung (306), die dazu eingerichtet ist, eine Genauigkeit jedes der mehreren zusammengesetzten Datenstücke zu berechnen, die einen Grad an Übereinstimmung zwischen dem zusammengesetzten Datenstück und dem Lehrobjekt (50A) angibt, und M Bildgebungspositionen aus den N Bildgebungspositionen auf der Grundlage der Genauigkeit jedes der mehreren zusammengesetzten Datenstücke zu bestimmen.

2. Informationsverarbeitungssystem (1) nach Anspruch 1, wobei

jedes der mehreren zusammengesetzten Datenstücke Punktwolkendaten ist, die das Objekt (50B) in einem dreidimensionalen Raum unter Verwendung einer Punktwolke darstellen, und
die Genauigkeit ein Wert gemäß einer Variation in der Punktwolke in Bezug auf das Lehrobjekt (50A) ist.

3. Informationsverarbeitungssystem (1) nach Anspruch 2, wobei
die Variation in der Punktwolke auf Variationen von Punkten in den mehreren mehreren zusammengesetzten Datenstücken in Bezug auf eine zuvor festgelegte Referenzoberfläche und auf Variationen von Punkten in den mehreren zusammengesetzten Datenstücken in Bezug auf eine Oberfläche des Lehrobjekts (50A) basiert.

4. Informationsverarbeitungssystem (1) nach einem der Ansprüche 1 bis 3, des Weiteren umfassend:
einen Pfadgenerator (307), der dazu eingerichtet ist, einen Bewegungspfad zum Ändern einer Position des Entfernungsbildsensors (20) zu den M Bildgebungspositionen zu generieren, um es dem Entfernungsbildsensor (20) zu erlauben, die Bildgebung des Objekts (50B) an den M Bildgebungspositionen in einer kürzesten Zeit zu vollenden.

5. Informationsverarbeitungssystem (1) nach einem der Ansprüche 1 bis 4, wobei
die Bestimmungsvorrichtung (306) die M Bildgebungspositionen auf der Grundlage der Genauigkeit und der von dem Entfernungsbildsensor (20) für die Bildgebung aufgewendeten Zeit zu bestimmen.

6. Informationsverarbeitungssystem (1) nach einem der Ansprüche 1 bis 5, des Weiteren umfassend:

eine Erlangungsvorrichtung (303), die dazu eingerichtet ist, mehrere vorläufige Bewegungspfade zu erlangen, die jeweils die N Bildgebungspositionen enthalten und jeweils ein Bewegungspfad des Entfernungsbildsensors (20) sind,
wobei, für jeden der mehreren vorläufigen Bewegungspfade,
die Bildgebungs-Steuerung (304) die N Entfernungsbilder erlangt,
der Datengenerator (305) die mehreren zusammengesetzten Datenstücke generiert und
die Bestimmungsvorrichtung (306) Kandidaten für die M Bildgebungspositionen auf der Grundlage der Genauigkeit jedes der mehreren zusammengesetzten Datenstücke bestimmt und
die Bestimmungsvorrichtung (306) einen vorläufigen Bewegungspfad aus den mehreren vorläufigen Bewegungspfaden auswählt und M Kandidaten für die M Bildgebungspositionen, die dem ausgewählten einen vorläufigen Bewegungspfad entsprechen, als die M Bildgebungspositionen bestimmt.

7. Informationsverarbeitungssystem (1) nach einem der Ansprüche 1 bis 6, wobei

der Entfernungsbildsensor (20) eine zuvor festgelegte Obergrenze für die Zeit zur Bildgebung hat und
M eine größte Anzahl von Entfernungsbildern ist, die durch den Entfernungsbildsensor (20) aufgenommen werden sollen, bis die von dem Entfernungsbildsensor (20) für die Bildgebung aufgewendete Zeit die zuvor festgelegte Obergrenze erreicht.

8. Informationsverarbeitungssystem (1) nach einem der Ansprüche 1 bis 6, des Weiteren umfassend:

eine Bildgebungs-Steuerung (301), die dazu eingerichtet ist, eine Anzeige zu steuern, ein Diagramm anzuzeigen, das eine Beziehung zwischen einer durch die Bestimmungsvorrichtung (306) bestimmten Anzahl von Bildgebungspositionen und der Genauigkeit zeigt,
wobei M eine Zahl ist, die durch einen Benutzer eingegeben wird, nachdem das Diagramm angezeigt wurde.

9. Informationsverarbeitungssystem (1) nach Anspruch 8, wobei
die Steuerung (301) die Anzeige steuert, ein Diagramm anzuzeigen, das eine Beziehung zwischen einer von dem Entfernungsbildsensor (20) für die Bildgebung aufgewendete Zeit, der Anzahl der durch die Bestimmungsvorrichtung (306) bestimmten Bildgebungspositionen und der Genauigkeit zeigt.

10. Informationsverarbeitungssystem (1) nach einem der Ansprüche 1 bis 9, wobei

die Bestimmungsvorrichtung (306) das genaueste Entfernungsbild aus den N Entfernungsbildern auswählt,
die Bestimmungsvorrichtung (306) des Weiteren wiederholt ein weiteres Entfernungsbild aus nicht ausgewählten Bildern der N Entfernungsbilder auf der Grundlage der Genauigkeit jedes von zusammengesetzten Datenstücken, die aus Kombinationen der nicht ausgewählten Bilder der N Entfernungsbilder und allen ausgewählten Bildern der N Entfernungsbilder generiert wurden, auswählt, bis die M Entfernungsbilder ausgewählt sind, und
die Bestimmungsvorrichtung (306) aus den N Bildgebungspositionen die M Bildgebungspositionen bestimmt, die den ausgewählten M Entfernungsbildern entsprechen.

**11.** Informationsverarbeitungssystem (1) nach einem der Ansprüche 1 bis 10, wobei

die Bildgebungs-Steuerung (304) des Weiteren Entfernungsbilder des Lehrobjekts (50A) erlangt, die mit dem Entfernungsbildsensor (20) an benachbarten Positionen aufgenommen werden, die sich in einer konstanten Positionsbeziehung zu jeder der N Bildgebungspositionen befinden, und
der Datengenerator (305) die mehreren zusammengesetzten Datenstücke aus mehreren verschiedenen Kombinationen von N Bildsätzen generiert und jeder der N Bildsätze ein Entfernungsbild, das an einer der N Bildgebungspositionen aufgenommen wurde, und ein Entfernungsbild, das an einer benachbarten Position der benachbarten Positionen für die eine der N Bildgebungspositionen aufgenommen wurde, enthält.

**12.** Informationsverarbeitungssystem (1) nach einem der Ansprüche 1 bis 11, wobei

die Bildgebungs-Steuerung (304) des Weiteren Entfernungsbilder von W Lehrobjekten, die das Lehrobjekt (50A) umfassen, erlangt und die Entfernungsbilder jedes der W Lehrobjekte mit dem Entfernungsbildsensor (20) an den N Bildgebungspositionen aufgenommen werden und
der Datengenerator (305) die mehreren zusammengesetzten Datenstücke aus mehreren verschiedenen Kombinationen von N Bildsätzen generiert und jeder der N Bildsätze W Entfernungsbilder der W Lehrobjekte, die an einer der N Bildgebungspositionen aufgenommen wurden, enthält.

**13.** Informationsverarbeitungssystem (1) nach einem der Ansprüche 1 bis 12, wobei

das Informationsverarbeitungssystem (1) die Messvorrichtung aufweist und
die Messvorrichtung, als ein Ergebnis der Messung des Objekts (50B), zusammengesetzte Daten der M Entfernungsbilder des Objekts (50B), die durch den Entfernungsbildsensor (20) an den M Bildgebungspositionen aufgenommen wurden, erlangt.

**14.** Informationsverarbeitungsverfahren für eine Messvorrichtung, die dazu eingerichtet ist, eine Messung eines Objekts (50B) dreidimensional unter Verwendung mehrerer Entfernungsbilder durchzuführen, die an verschiedenen Bildgebungspositionen durch einen Entfernungsbildsensor (20) erlangt werden, der dazu eingerichtet ist, ein Entfernungsbild unter Verwendung eines Triangulationsprinzips zu erlangen, wobei das Informationsverarbeitungsverfahren ein Verfahren zum Bestimmen von Bildgebungspositionen ist, an denen M Entfernungsbilder, die bei der Messung des Objekts (50B) verwendet werden sollen, aufgenommen werden, wobei das Informationsverarbeitungsverfahren umfasst:

Steuern und Bewegen des Entfernungsbildsensors (20) zu N Bildgebungspositionen und Erlangen von N Entfernungsbildern eines Lehrobjekts (50A) an den N Bildgebungspositionen, wobei N > M ist;
Generieren mehrerer zusammengesetzter Datenstücke aus mehreren verschiedenen Kombinationen der N Entfernungsbilder; und
Berechnen einer Genauigkeit jedes der mehreren zusammengesetzten Datenstücke, die einen Grad an Übereinstimmung zwischen dem zusammengesetzten Datenstück und dem Lehrobjekt (50A) angibt, und Bestimmen von M Bildgebungspositionen aus den N Bildgebungspositionen auf der Grundlage der Genauigkeit jedes der mehreren zusammengesetzten Datenstücke.

**15.** Programm, um einen Computer zu veranlassen, jeden Schritt der in dem Informationsverarbeitungsverfahren nach Anspruch 14 enthaltenen Operationen durchzuführen, wenn es mit einem Informationsverarbeitungssystem nach einem der Ansprüche 1-13 verwendet wird.

**Revendications**

**1.** Système de traitement d'informations (1) pour un appareil de mesure configuré pour effectuer la mesure d'un objet (50B) en trois dimensions à l'aide d'une pluralité d'images de télémétrie obtenues à différentes positions d'imagerie par un capteur d'images de télémétrie (20) configuré pour obtenir une image de télémétrie en utilisant un principe de triangulation, le système de traitement d'informations (1) étant un système pour déterminer des positions d'imagerie auxquelles M images de télémétrie susceptibles d'être utilisées dans la mesure de l'objet (50B) sont capturées, le système de traitement d'informations (1) comprenant :

un contrôleur d'imagerie (304) configuré pour commander et déplacer le capteur d'images de télémétrie (20) dans N positions d'imagerie et obtenir N images de télémétrie d'un objet d'apprentissage (50A) aux N positions d'imagerie, où N > M ;

un générateur de données (305) configuré pour générer une pluralité d'éléments de données composites à partir d'une pluralité de combinaisons différentes des N images de télémétrie ; et

un déterminateur (306) configuré pour calculer une précision de chacun de la pluralité d'éléments de données composites indiquant un degré de correspondance entre l'élément de données composite et l'objet d'apprentissage (50A) et pour déterminer M positions d'imagerie parmi les N positions d'imagerie sur la base de la précision de chacun de la pluralité d'éléments de données composites.

2. Système de traitement d'informations (1) selon la revendication 1, dans lequel

chacun de la pluralité d'éléments de données composites est une donnée de nuage de points représentant l'objet (50B) dans un espace tridimensionnel à l'aide d'un nuage de points, et

la précision est une valeur en fonction d'une variation dans le nuage de points par rapport à l'objet d'apprentissage (50A).

3. Système de traitement d'informations (1) selon la revendication 2, dans lequel
la variation dans le nuage de points est basée sur des variations de points dans la pluralité d'éléments de données composites par rapport à une surface de référence prédéterminée et sur des variations de points dans la pluralité éléments de données composites par rapport à une surface de l'objet d'apprentissage (50A).

4. Système de traitement d'information (1) selon l'une des revendications 1 à 3, comprenant en outre :
un générateur de trajectoire (307) configuré pour générer une trajectoire de mouvement pour modifier une position du capteur d'images de télémétrie (20) dans les M positions d'imagerie pour permettre au capteur d'images de télémétrie (20) d'accomplir l'imagerie de l'objet (50B) aux M positions d'imagerie dans un temps le plus court possible.

5. Système de traitement d'informations (1) selon l'une quelconque des revendications 1 à 4, dans lequel
le déterminateur (306) détermine les M positions d'imagerie sur la base de la précision et du temps d'imagerie utilisés par le capteur d'images de télémétrie (20).

6. Système de traitement d'information (1) selon l'une des revendications 1 à 5, comprenant en outre :

un dispositif d'obtention (303) configuré pour obtenir une pluralité de trajectoires de mouvement provisoires comportant chacune les N positions d'imagerie et constituant chacune une trajectoire de mouvement du capteur d'images de télémétrie (20),

dans lequel, pour chacune de la pluralité de trajectoires de mouvement provisoires,

le contrôleur d'imagerie (304) obtient les N images de télémétrie,

le générateur de données (305) génère la pluralité d'éléments de données composites, et

le déterminateur (306) détermine des candidats pour les M positions d'imagerie sur la base de la précision de chacun de la pluralité d'éléments de données composites, et

le déterminateur (306) sélectionne une trajectoire de mouvement provisoire parmi la pluralité de trajectoires de mouvement provisoires et détermine M candidats pour les M positions d'imagerie correspondant à la trajectoire de mouvement provisoire sélectionnée en tant que M positions d'imagerie.

7. Système de traitement d'informations (1) selon l'une quelconque des revendications 1 à 6, dans lequel

le capteur d'images de télémétrie (20) a une limite supérieure prédéterminée pour le temps d'imagerie, et
M est le plus grand nombre d'images de télémétrie à capturer par le capteur d'images de télémétrie (20) jusqu'à ce que le temps d'imagerie utilisé par le capteur d'images de télémétrie (20) atteigne la limite supérieure prédéterminée.

8. Système de traitement d'information (1) selon l'une des revendications 1 à 6, comprenant en outre :

un contrôleur (301) configuré pour commander un écran pour afficher un graphique montrant une relation entre un nombre de positions d'imagerie déterminées par le déterminateur (306) et la précision,
où M est un nombre entré par un utilisateur après l'affichage du graphique.

9. Système de traitement d'informations (1) selon la revendication 8, dans lequel

le contrôleur (301) commande l'écran pour afficher un graphique montrant une relation entre le temps d'imagerie utilisé par le capteur d'images de télémétrie (20), le nombre de positions d'imagerie déterminé par le déterminateur (306), et la précision.

10. Système de traitement d'informations (1) selon l'une quelconque des revendications 1 à 9, dans lequel

le déterminateur (306) sélectionne une image de télémétrie la plus précise parmi les N images de télémétrie, le déterminateur (306) sélectionne en outre de manière répétée, jusqu'à ce que les M images de télémétrie soient sélectionnées, une autre image de télémétrie parmi des images non sélectionnées des N images de télémétrie sur la base de la précision de chacun des éléments de données composites générés à partir de combinaisons des images non sélectionnées des N images de télémétrie et de toutes les images sélectionnées des N images de télémétrie, et
le déterminateur (306) détermine, à partir des N positions d'imagerie, les M positions d'imagerie correspondant aux M images de télémétrie sélectionnées.

11. Système de traitement d'informations (1) selon l'une quelconque des revendications 1 à 10, dans lequel

le contrôleur d'imagerie (304) obtient en outre des images de télémétrie de l'objet d'apprentissage (50A) capturées avec le capteur d'images de télémétrie (20) à des positions adjacentes qui sont dans une relation de position constante avec chacune des N positions d'imagerie, et
le générateur de données (305) génère la pluralité de données composites à partir d'une pluralité de combinaisons différentes de N ensembles d'images, et chacun des N ensembles d'images comporte une image de télémétrie capturée à l'une des N positions d'imagerie et une image de télémétrie capturée à une position adjacente des positions adjacentes pour l'une des N positions d'imagerie.

12. Système de traitement d'informations (1) selon l'une quelconque des revendications 1 à 11, dans lequel

le contrôleur d'imagerie (304) obtient en outre des images de télémétrie de W objets d'apprentissage comportant l'objet d'apprentissage (50A), et les images de télémétrie de chacun des W objets d'apprentissage sont capturées avec le capteur d'images de télémétrie (20) aux N positions d'imagerie, et
le générateur de données (305) génère la pluralité d'éléments de données composites à partir d'une pluralité de combinaisons différentes de N ensembles d'images, et chacun des N ensembles d'images comporte W images de télémétrie des W objets d'apprentissage capturées à l'une des N positions d'imagerie.

13. Système de traitement d'informations (1) selon l'une quelconque des revendications 1 à 12, dans lequel

le système de traitement d'informations (1) comporte l'appareil de mesure, et
l'appareil de mesure obtient, à la suite de la mesure de l'objet (50B), des données composites des M images de télémétrie de l'objet (50B) capturées par le capteur d'images de télémétrie (20) aux M positions d'imagerie.

14. Procédé de traitement d'informations pour un appareil de mesure configuré pour effectuer la mesure d'un objet (50B) en trois dimensions à l'aide d'une pluralité d'images de télémétrie obtenues à différentes positions d'imagerie par un capteur d'images de télémétrie (20) configuré pour obtenir une image de télémétrie en utilisant un principe de triangulation, le procédé de traitement d'informations étant un procédé pour déterminer des positions d'imagerie auxquelles M images de télémétrie susceptibles d'être utilisées dans la mesure de l'objet (50B) sont capturées, le procédé de traitement d'informations (1) comprenant :

la commande et le déplacement du capteur d'images de télémétrie (20) dans N positions d'imagerie et l'obtention de N images de télémétrie d'un objet d'apprentissage (50A) aux N positions d'imagerie, où N > M ;
la génération d'une pluralité d'éléments de données composites à partir d'une pluralité de combinaisons différentes des N images de télémétrie ; et
le calcul d'une précision de chacun de la pluralité d'éléments de données composites indiquant un degré de correspondance entre l'élément de données composite et l'objet d'apprentissage (50A) et la détermination de M positions d'imagerie parmi les N positions d'imagerie sur la base de la précision de chacun de la pluralité d'éléments de données composites.

15. Programme pour amener un ordinateur à effectuer chaque étape des opérations incluses dans le procédé de traitement d'informations selon la revendication 14, lorsqu'il est utilisé avec un système de traitement d'informations tel que défini dans l'une quelconque des revendications 1 à 13.

FIG. 1

EP 4 328 539 B1

FIG. 2

# FIG. 3A

```
        ┌─────────────────────────┐
        │          Start          │
        └─────────────────────────┘
                     │
                     ▼           ～ S1001
        ┌─────────────────────────┐
        │  Obtain setting information  │
        └─────────────────────────┘
                     │
                     ▼           ～ S1002
        ┌─────────────────────────┐
        │   Capture image at each of N  │
        │   tentative imaging positions │
        └─────────────────────────┘
                     │
                     ▼           ～ S1003
        ┌─────────────────────────┐
        │  Determine M positions from N │
        │           positions           │
        └─────────────────────────┘
                     │
                     ▼           ～ S1004
        ┌─────────────────────────┐
        │ Generate actual movement path │
        │      connecting M positions   │
        └─────────────────────────┘
                     │
                     ▼
        ┌─────────────────────────┐
        │           End           │
        └─────────────────────────┘
```

# FIG. 3B

```
        ┌─────────────────────────┐
        │          Start          │
        └─────────────────────────┘
                     │
                     ▼           ～ S2001
        ┌─────────────────────────┐
        │   Capture image at each of M  │
        │     actual imaging positions  │
        └─────────────────────────┘
                     │
                     ▼           ～ S2002
        ┌─────────────────────────┐
        │    Generate composite data    │
        │  based on M captured images   │
        └─────────────────────────┘
                     │
                     ▼           ～ S2003
        ┌─────────────────────────┐
        │   Inspect shape of workpiece  │
        └─────────────────────────┘
                     │
                     ▼
        ┌─────────────────────────┐
        │           End           │
        └─────────────────────────┘
```

FIG. 4A

FIG. 4B

FIG. 4C

Measurement
surface

$\sigma_B{}^2$

Reference
surface

$\sigma_A{}^2$

$D=\sigma_A{}^2+\sigma_B{}^2$

Measurement
surface

$\sigma_C{}^2$

$\sigma_B{}^2$

Reference
surface

$\sigma_A{}^2$

$D=\sigma_A{}^2+\sigma_B{}^2+\sigma_C{}^2$

Direction of dimension measurement

Measurement
surface

z

Reference
surface

$D=Var[z]$

EP 4 328 539 B1

## FIG. 5A

S1002

↓

Calculate variation error and inspection takt time for each of M = 1 to any number  — S1010

↓

Display graph showing relationship between value M and variation error  — S1011

↓

Determine value M based on user input  — S1012

↓

S1003

## FIG. 5B

Start

↓

Obtain setting information  — S1001

↓

Image from N tentative imaging positions **and positions adjacent to N tentative imaging positions**  — **S1022**

↓

Determine M positions **based on range images captured from tentative imaging positions and adjacent positions**  — **S1023**

↓

Generate actual movement path connecting M positions  — S1004

↓

End

FIG. 6A

FIG. 6B

EP 4 328 539 B1

FIG. 7A

(Step 1) Image at N positions

(Step 2) Select M positions

(Step 3) Generate actual movement path

FIG. 7B

(Step 3) Generate actual movement path

# FIG. 8

(Step 1) Image at N positions

L=1
L=2
L=3

(Step 2) Select M positions respectively

L=1
L=2
L=3

(Step 3) Generate actual movement path

L=2

# FIG. 9

Viewed from above

Viewed laterally

uv plane

FIG. 10

Variation error D of composite data

Number of selected range images (M)

- - - - - Select M range images randomly (random selection)

———— Select M range images with greedy selection method

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012220338 A

- JP 2015178984 A

**Non-patent literature cited in the description**

- Automated 3D surface scanning based on CAD model. MECHATRONICS. PERGAMON PRESS, 01 September 2005, vol. 15, 837-857